# EUROPEAN PATENT APPLICATION

(11) **EP 4 439 832 A1**
(43) Date of publication of application: **02.10.2024**
(21) Application number: 23769797.4
(22) Date of filing: 14.03.2023
(51) Int. Cl.: H01M 50/244, H01M 50/249, H01M 50/289, H01M 50/291, H01M 50/204

(54) **EDGE BEAM FOR BATTERY TRAY, BATTERY TRAY, BATTERY PACK, AND VEHICLE**

(30) Priority: 14.03.2022 CN 202210249500
(71) Applicant: BYD Company Limited, Shenzhen, Guangdong 518118 (CN)
(72) Inventor: TANG, Jianglong, Shenzhen, Guangdong 518118 (CN); LI, Jianqiang, Shenzhen, Guangdong 518118 (CN); LIAO, Zhengyuan, Shenzhen, Guangdong 518118 (CN); WAN, Long, Shenzhen, Guangdong 518118 (CN); HE, Wei, Shenzhen, Guangdong 518118 (CN)
(74) Representative: Dehns Germany Partnerschaft mbB
(86) International application number: PCT/CN2023/081413
(87) International publication number: WO 2023/174295

(57) **Abstract**

The present disclosure discloses an edge beam (23) for a battery tray (100), a battery tray (100), a battery pack (200) and a vehicle (2000). The edge beam (23) includes: an edge beam body (231). The edge beam body (231) defines a cavity (2311), and the edge beam body (231) has a partition portion (232). The partition portion (232) is located in the cavity, and the partition portion (232) is connected between a top wall (233) and a bottom wall (234) of the cavity to divide the cavity (2311) into a first sub-cavity (2351) and a second sub-cavity (2352). The first sub-cavity (2351) and the second sub-cavity (2352) are arranged in a first direction of the edge beam (23) in sequence. The first sub-cavity (2351) has a cross-sectional area of S1, the second sub-cavity (2352) has a cross-sectional area of S2, and S1 and S2 meet the relation formula: 0.8<S1/S2<1.

## Description

### CROSS REFERENCE TO RELATED APPLICATIONS

**The** present disclosure claims priority to and benefits of Chinese Patent Application No 2022102495003 filed by BYD Company Limited on March 14, 2022 and entitled "EDGE BEAM FOR BATTERY TRAY, BATTERY TRAY, BATTERY PACK AND VEHICLE".

### FIELD

The present disclosure relates to the field of batteries, and specifically to an edge beam for a battery tray, a battery tray, a battery pack and a vehicle.

### BACKGROUND

In related art, a battery pack is provided with a battery tray. The battery tray includes a frame, and the frame includes an edge beam. The edge beam has insufficient structural strength and poor stability, so that the edge beam tends to deform, affecting the service life of the edge beam. When the edge beam is impacted, the impact force transmitted to the inside of the battery pack is large, and a battery core in the battery pack has a high risk of damage, affecting the safety of the battery pack during use.

### SUMMARY

The present disclosure aims to at least solve one of the technical problems in the related art. To this end, an object of the present disclosure is to provide an edge beam for a battery tray. By means of the edge beam for a battery tray, the structural strength and rigidity of the edge beam is increased, the battery pack is ensured to have an appropriate modal, the impact force is absorbed when the sub-cavity is impacted, and the impact force transmitted to the inside of the battery pack is reduced, thereby improving the safety of the battery pack during use, reducing the risk of deformation of the edge beam, and extending the service life of the edge beam and the battery tray.

The present disclosure further provides a battery tray.

The present disclosure further provides a battery pack.

The present disclosure further provides a vehicle.

**In** accordance with the edge beam for a battery tray according to the present disclosure, the battery tray has a placing slot for accommodating a battery core. The edge beam includes: an edge beam body. The edge beam body defines a cavity, and the edge beam body has a partition portion. The partition portion is located in the cavity, and the partition portion is connected between a top wall and a bottom wall of the cavity to divide the cavity into a first sub-cavity and a second sub-cavity. The first sub-cavity and the second sub-cavity are arranged in a first direction of the edge beam in sequence. The first sub-cavity has a cross-sectional area of S 1, the second sub-cavity has a cross-sectional area of S2, and S1 and S2 meet the relation formula: 0.8<S1/S2<1 .

In accordance with the edge beam for a battery tray according to the present disclosure, by means of the edge beam body according to the present disclosure, the structural strength and rigidity of the edge beam is increased, the battery pack is ensured to have an appropriate modal, the risk of deformation of the edge beam is reduced, to extend the service life of the edge beam and the battery tray, and the battery pack has a high impact protection capability while the battery pack is ensured to have an appropriate modal.

In some embodiments of the present disclosure, in a first direction of the edge beam, the first sub-cavity is located between the second sub-cavity and the placing slot.

In some embodiments of the present disclosure, the partition portion is obliquely connected between the top wall and the bottom wall of the cavity.

In some embodiments of the present disclosure, in a direction from an upper end to a lower end of the edge beam, the partition portion is arranged to tilt away from the placing slot.

In some embodiments of the present disclosure, the cross-sectional shape of the first sub-cavity and the cross-sectional shape of the second sub-cavity are both triangular or trapezoidal.

In some embodiments of the present disclosure, the edge beam is configured as an integrally formed component.

In some embodiments of the present disclosure, in a width direction of the edge beam, the cavity has a first side wall arranged away from the placing slot. The first side wall is connected between the top wall and the bottom wall of the cavity, and the first side wall is connected to the partition portion.

In some embodiments of the present disclosure, a lower end of the first side wall is connected with a first connecting portion extending toward the interior of the cavity. The first connecting portion is located at a side of the bottom wall of the cavity facing the top wall of the cavity, the first side wall is connected to the bottom wall of the cavity and the partition portion through the first connecting portion, and the first connecting portion is fixedly connected to the bottom wall of the cavity.

In some embodiments of the present disclosure, the cavity has a second side wall close to the placing slot. The second side wall is connected between the top wall and the bottom wall of the cavity, and the second side wall is connected to the partition portion.

In some embodiments of the present disclosure, an upper end of the second side wall is connected with a second connecting portion extending toward the interior of the cavity. The second connecting portion is located at a side of the top wall of the cavity facing the bottom wall of the cavity, the second side wall is connected to the top wall of the cavity and the partition portion through the second connecting portion, and the second connecting portion is fixedly connected to the top wall of the cavity.

In some embodiments of the present disclosure, the edge beam further includes a supporting portion. The supporting portion is provided at a side of the edge beam body close to the placing slot, and the supporting portion is configured to support the battery core.

In some embodiments of the present disclosure, a lower end of the second side wall is connected with the supporting portion extending toward the placing slot, and the second side wall is connected to the bottom wall of the cavity through the supporting portion.

In some embodiments of the present disclosure, the second side wall is obliquely connected between the top wall and the bottom wall of the cavity, and in the direction from the upper end to the lower end of the edge beam, the second side wall is arranged to tilt toward the placing slot.

In some embodiments of the present disclosure, in the width direction of the edge beam, the bottom wall of the cavity has a structure strengthening portion extending below the supporting portion, and the structure strengthening portion is connected to an end portion of the supporting portion close to the placing slot.

In some embodiments of the present disclosure, the structure strengthening portion is provided with a boss protruding toward the supporting portion, and the boss is connected to the supporting portion.

In some embodiments of the present disclosure, in the width direction of the edge beam, the cavity has a first side wall arranged away from the placing slot. The first side wall is connected between the top wall and the bottom wall of the cavity. The cavity has a second side wall close to the placing slot. The second side wall is connected between the top wall and the bottom wall of the cavity. The top wall of the cavity, the bottom wall of cavity, the first side wall and the second side wall define the cavity together, and the bottom wall of the cavity extends toward the placing slot to form the supporting portion configured to support the battery core.

The battery tray according to the present disclosure includes the edge beam for a battery tray as described above.

The battery tray according to the present disclosure includes: a tray bottom plate, where the tray bottom plate includes a bottom plate body and an extension portion, in which the bottom plate body defines a placing slot for accommodating a battery core, and the extension portion extends along a peripheral edge of the bottom plate body; and a frame, where the frame includes a side beam, a front beam and a rear beam. The side beam is the edge beam. The side beam, the front beam and the rear beam are connected to form a mounting space, and the bottom plate body is mounted in the mounting space. In a height direction of the battery tray, the extension portion is located above the frame and arranged on the frame. At least one of the side beam, the front beam and the rear beam has a supporting portion extending toward the mounting space and the supporting portion is configured to support the tray bottom plate.

The battery pack according to the present disclosure includes: a battery core; a battery tray, where the battery tray is a battery tray as described above, the battery tray has a placing slot, and the battery core is accommodated in the placing slot.

The vehicle according to the present disclosure includes a battery pack as described above.

The additional aspects and advantages of the present disclosure will be set forth in part in the description below, some of which will become apparent from the following description, or will be understood by the practice of the present disclosure.

### BRIEF DESCRIPTION OF THE DRAWINGS

FIG. 1 is an exploded view of a battery pack according to an embodiment of the present disclosure.
FIG. 2 is a cross-sectional view of a battery pack according to an embodiment of the present disclosure.
FIG**.** 3 is a partially enlarged view of part A in FIG. 2.
FIG. 4 schematically shows an assembly of a battery tray and a battery core according to an embodiment of the present disclosure.
FIG. 5 is a schematic view of a battery tray according to an embodiment of the present disclosure.
FIG. 6 is an exploded view of a battery tray according to an embodiment of the present disclosure.
FIG. 7 schematically shows a tray bottom plate of a battery tray according to an embodiment of the present disclosure.
FIG. 8 schematically shows a frame of a battery tray according to an embodiment of the present disclosure.
FIG. 9 schematically shows a side beam of a battery tray according to an embodiment of the present disclosure.
FIG. 10 is a partially enlarged view of part B in FIG. 9.
FIG. 11 is a partially enlarged view of an assembly of a battery tray and a battery core according to an embodiment of the present disclosure.
FIG. 12 is a cross-sectional view of an edge beam according to an embodiment of the present disclosure.
FIG. 13 is a cross-sectional view of an edge beam according to another embodiment of the present disclosure.
FIG. 14 is a schematic view of a vehicle according to an embodiment of the present disclosure.

### DETAILED DESCRIPTION

Detail description of the embodiments of the present disclosure will be made in the following, and examples of the embodiments are shown in accompanying drawings, where the same or similar elements or the elements having the same or similar functions are denoted by the same or similar reference numerals throughout the description. The embodiments described below with reference to the accompanying drawings are exemplary and are only used to interpret the present disclosure, instead of limiting the present disclosure.

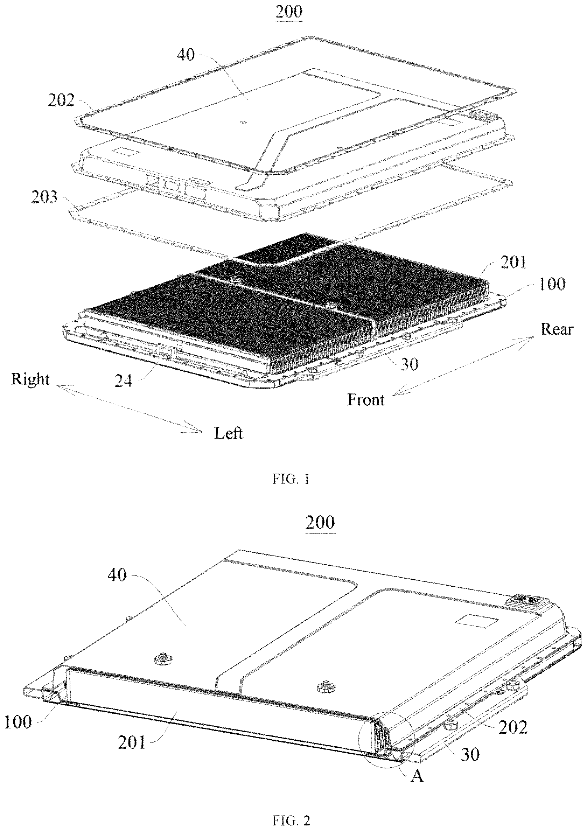

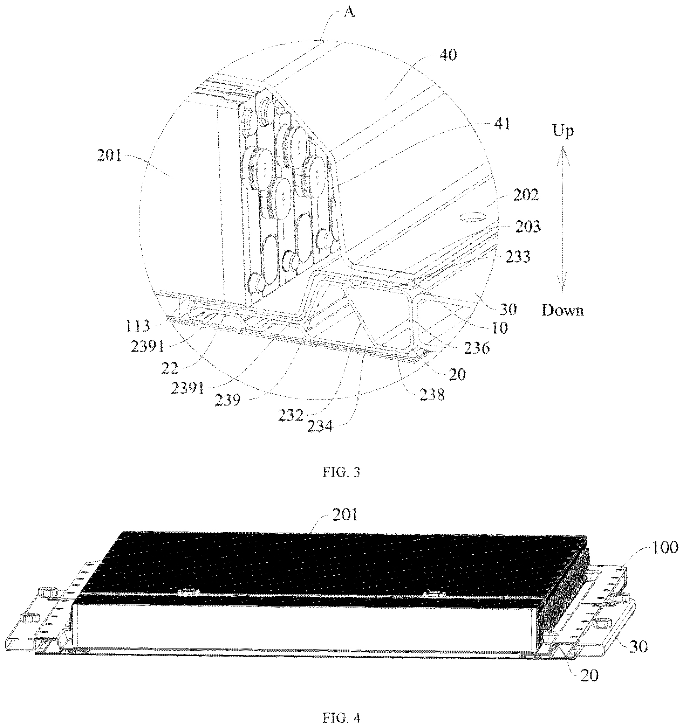

An edge beam 23 for a battery tray 100 according to an embodiment of the present disclosure will be described below with reference to FIGs. 1 to 13. Multiple edge beams 23 are connected into a frame 20 of the battery tray 100, and the frame 20 defines a mounting space 21. The battery tray 100 is applied to a battery pack 200, and the battery tray 100 has a tray bottom plate 10 for supporting a battery core 201. The edge beam 23 is connected to the tray bottom plate 10. The battery tray 100 has a placing slot 111 for accommodating the battery core 201.

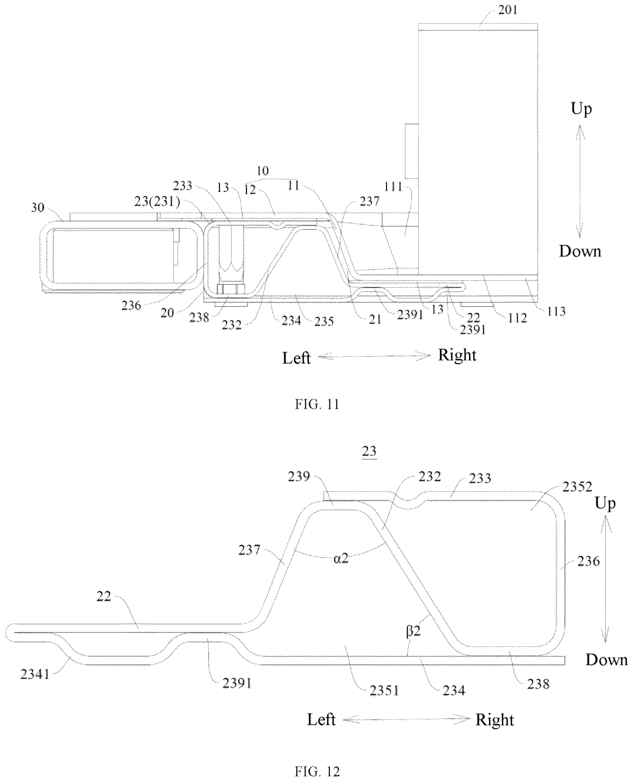

As shown in FIGs. 1 to 13, the edge beam 23 according to the embodiment of the present disclosure includes an edge beam body 231. The edge beam body 231 defines a cavity 2311, and the edge beam body 231 has a partition portion 232. The partition portion 232 is located in the cavity, and the partition portion 232 is connected between a top wall 233 of the cavity 2311 and a bottom wall 234 of the cavity 2311. The partition portion 232 divides the cavity 2311 into a first sub-cavity 2351 and a second sub-cavity 2352. The first sub-cavity 2351 and the second sub-cavity 2352 are arranged in a first direction of the edge beam 23 in sequence. The first direction of the edge beam 23 refers to a width direction of the edge beam 23, a width direction of the battery tray 100, or a length direction of the battery tray 100. When the battery tray 100 is arranged in a pattern as shown in FIG. 11, the width direction of the edge beam 23 refers to a left-right direction as shown in FIG. 11. It is to be understood that the partition portion 232 can divide the 2311 cavity into multiple sub-cavities 235 when connected between the top wall 233 of the cavity 2311 and the bottom wall 234 of the cavity 2311. When the partition portion 232 divides the cavity 2311 into two sub-cavities 235, the two sub-cavities 235 are respectively the first sub-cavity 2351 and the second sub-cavity 2352. When the partition portion 232 divides the cavity 2311 into four sub-cavities 235, the four sub-cavities 235 are arranged in the first direction of the edge beam 23 in sequence. Two adjacent sub-cavities 235 form the first sub-cavity 2351, and the other two adjacent sub-cavities 235 form the second sub-cavity 2352. When the partition portion 232 divides the cavity 2311 into six sub-cavities 235, the six sub-cavities 235 are arranged in the first direction of the edge beam 23 in sequence. Three adjacent sub-cavities 235 form the first sub-cavity 2351, and the other three adjacent sub-cavities 235 form the second sub-cavity 2352, and so on. The present disclosure will be described by way of example in which the partition portion 232 divides the cavity 2311 into two sub-cavities 235.

The first sub-cavity 2351 has a cross-sectional area of S1, the second sub-cavity 2352 has a cross-sectional area of S2, and S1 and S2 meet the relation formula: 0.8<S1/S2<1, further, 0.8<S1/S2<0.99. The cross-sectional area of the first sub-cavity 2351 refers to the cross-sectional area in the width direction of the edge beam 23, that is, the area of a cross section of the first sub-cavity 2351 that is perpendicular to a length direction of the edge beam 23. The cross-sectional area of the second sub-cavity 2352 refers to the cross-sectional area in the width direction of the edge beam 23, that is, the area of a cross section of the second sub-cavity 2352 that is perpendicular to a length direction of the edge beam 23. By dividing the cavity 2311 into the first sub-cavity 2351 and the second sub-cavity 2352 by the partition portion 232, the structural strength and rigidity of the edge beam 23 is increased, and the risk of deformation of the edge beam 23 is reduced, to extend the service life of the edge beam 23 and the battery tray 100. When one cavity 235 of the first sub-cavity 2351 and the second sub-cavity 2352 away from the mounting space 21 of the battery tray 100 is impacted, the impacted sub-cavity 235 can absorb the impact force, which reduces the impact force transmitted to the inside of the battery pack 200, and reduces the risk of damage of the battery core 201 in the battery pack 200, thus improving the safety of the battery pack 200 during use. Moreover, when 0.8<S1/S2<1, the battery pack 200 is ensured to have an appropriate modal, the probability of resonance of the battery pack 200 can be reduced, and the battery pack 200 can have a high impact protection capability while the battery pack 200 is ensured to have an appropriate modal, so that the battery pack 200 can achieve a balance between the modal of the whole pack and the impact protection of the vehicle. In some embodiments of the present disclosure, the partition portion 232 is obliquely connected between the top wall 233 of the cavity 2311 and the bottom wall 234 of the cavity 2311. By obliquely connecting the partition portion 232 between the top wall 233 of the cavity 2311 and the bottom wall 234 of the cavity 2311, the partition portion 232 is reliably supported between the top wall 233 of the cavity 2311 and the bottom wall 234 of the cavity 2311, whereby the structural strength and rigidity of the edge beam body 231 are increased, the structural stability of the edge beam body 231 is increased, and the risk of deformation of the edge beam 23 is reduced, to extend the service life of the edge beam 23 and the battery tray 100.

In some embodiments of the present disclosure, as shown in FIG. 12, in the first direction of the edge beam 23, the first sub-cavity 2351 is located between the second sub-cavity 2352 and the placing slot 111, or it can be considered that the first sub-cavity 2351 is located between the second sub-cavity 2352 and the mounting space 21 of the battery tray 100. When the edge beam 23 is arranged in a pattern as shown in FIG. 12, the placing slot 111 is left to the edge beam 23, the sub-cavity 235 on the left side is the first sub-cavity 2351, and the sub-cavity 235 on the right side is the second sub-cavity 2352. By arranging the first sub-cavity 2351 and the second sub-cavity 2352 in the width direction of the edge beam 23 in sequence, when the sub-cavity 235 of the multiple sub-cavities 235 away from the placing slot 111 is impacted, that is, the second sub-cavity 2352 on the right side in FIG. 12 is impacted, the impacted second sub-cavity 2352 can absorb the impact force, which reduces the impact force transmitted to the inside of the battery pack 200, and reduces the risk of damage of the battery core 201 in the battery pack 200, thus improving the safety of the battery pack 200 during use.

In the battery pack 200, the cross-sectional area of the sub-cavity 235 close to the placing slot 111 has a great influence on the modal of the battery pack 200, that is, the cross-sectional area of the first sub-cavity 2351 has a great influence on the modal of the battery pack 200. As the cross-sectional area S1 of the first sub-cavity 2351 increases, the rigidity of the battery pack 200 becomes worse, the modal of the battery pack 200 declines, and the probability of resonance of the battery pack 200 increases. The cross-sectional area of the sub-cavity 235 away from the placing slot 111 has a great influence on the impact protection of the vehicle, that is, the cross-sectional area of the second sub-cavity 2352 has a great influence on the impact protection of the vehicle. As the cross-sectional area S2 of the second sub-cavity 2352 increases, the pressurized area of the second sub-cavity 2352 becomes smaller, the energy that the edge beam 23 can absorb upon collision of the vehicle with an external force becomes smaller, and the collision safety risk rises. Therefore, when 0.8<S1/S2<1, the battery pack 200 is ensured to have an appropriate modal, the probability of resonance of the battery pack 200 can be reduced, and the battery pack 200 can have a high impact protection capability while the battery pack 200 is ensured to have an appropriate modal, so that the battery pack 200 can achieve a balance between the modal of the whole pack and the impact protection of the vehicle.

In some embodiments of the present disclosure, as shown in FIGs. 11 and 12, when the edge beam 23 is arranged in a pattern as shown in FIG. 11, in a direction from an upper end to a lower end of the edge beam 23, the partition portion 232 is arranged to tilt away from the placing slot 111, or it can be considered that the partition portion 232 is arranged to tilt away from the mounting space 21 of the battery tray 100, or it can be considered that in an up-down direction of the battery tray 100, the partition portion 232 is arranged to extend obliquely away from the placing slot 111. The partition portion 232 divides the cavity 2311 into the first sub-cavity 2351 and the second sub-cavity 2352. Through such an arrangement, the structural strength and rigidity of the edge beam 23 is increased, and the stability of the edge beam 23 is improved, thereby improving the capability of the edge beam 23 to support the battery core 201, and further reducing the risk of deformation of the frame 20.

In some embodiments of the present disclosure, the partition portion 232 is vertically connected between the top wall 233 of the cavity 2311 and the bottom wall 234 of the cavity 2311. Through such an arrangement, the partition portion 232 is more reliably supported between the top wall 233 of the cavity 2311 and the bottom wall 234 of the cavity 2311, the structural strength of the edge beam 23 is increased, and the stability of the edge beam 23 is improved, thereby improving the capability of the edge beam 23 to support the battery core 201, and further reducing the risk of deformation of the frame 20.

In some embodiments of the present disclosure, as shown in FIGs. 11 and 12, the cross-sectional shape of the first sub-cavity 2351 and the cross-sectional shape of the second sub-cavity 2352 are both triangular or trapezoidal. Through such an arrangement, the structural stability of the edge beam 23 is increased, and the risk of deformation of the edge beam 23 is further reduced, thereby further extending the service life of the edge beam 23 and the battery tray 100.

According to a specific embodiment of the present disclosure, the first sub-cavity 2351 is located at a side of the second sub-cavity 2352 close to the mounting space 21. The cross-sectional shape of the first sub-cavity 2351 is triangular, and further, isosceles triangle or equilateral triangle. The bottom wall 234 of the cavity 2311 serves as a bottom wall of the triangle. Through such an arrangement, the structural stability of the edge beam 23 is further increased, and the risk of deformation of the edge beam 23 is further reduced, thereby further extending the service life of the edge beam 23 and the battery tray 100.

In some optional embodiments, the angle between the bottom wall 234 of the cavity 2311 and the partition portion 232 serves as a base angle of the triangle. The base angle is β1 that meets the relation formula: 50°≤β1≤70°. For example, β1 is 60°. Through such an arrangement, the structural stability of the edge beam 23 is further increased, and the risk of deformation of the edge beam 23 is further reduced, thereby further extending the service life of the edge beam 23 and the battery tray 100.

In some optional embodiments, the vertex angle of the triangle is α1 that meets the relation formula: 50°≤α1≤70°. For example, α1 is 60°. In this way, the cross-sectional shape of the first sub-cavity 2351 is arranged to be an equilateral triangle. Through such an arrangement, the structural stability of the edge beam 23 is further increased, and the risk of deformation of the edge beam 23 is further reduced, thereby further extending the service life of the edge beam 23 and the battery tray 100.

According to another specific embodiment of the present disclosure, as shown in FIGs. 11 and 12, in the width direction of the edge beam 23, the first sub-cavity 2351 is located at a side of the second sub-cavity 2352 close to the placing slot 111. The cross-sectional shape of the first sub-cavity 2351 is arranged to be a trapezoid. Further, the bottom wall 234 of the cavity 2311 serves as a bottom wall of the trapezoid. The angle between the bottom wall 234 of the cavity 2311 and the partition portion 232 serves as a base angle of the trapezoidal shape of the first sub-cavity 2351. The base angle is β2 that meets the relation formula: 50°≤β2≤70°. For example, β2 is 60°. Through such an arrangement, the structural stability of the edge beam 23 is further increased, and the risk of deformation of the edge beam 23 is further reduced, thereby further extending the service life of the edge beam 23 and the battery tray 100.

In some optional embodiments, as shown in FIG. 12, the angle between the two waists of the trapezoidal shape of the first sub-cavity 2351 is α2 that meets the relation formula: 50°≤α2≤70°. For example, α2 is 60°. Through such an arrangement, the structural stability of the edge beam 23 is further increased, and the risk of deformation of the edge beam 23 is further reduced, thereby further extending the service life of the edge beam 23 and the battery tray 100.

In some embodiments of the present disclosure, as shown in FIG. 12, the cross-sectional shape of the second sub-cavity 2352 is arranged to be a trapezoid. The bottom wall 234 of the cavity 2311 serves as a top wall of the trapezoidal shape of the second sub-cavity 2352, and the top wall 233 of the cavity 2311 serves as a bottom wall of the trapezoidal shape of the second sub-cavity 2352. Through such an arrangement, the structural stability of the edge beam 23 is further increased, and the risk of deformation of the edge beam 23 is further reduced, thereby further extending the service life of the edge beam 23 and the battery tray 100.

In some embodiments of the present disclosure, the edge beam body 231 also has a supporting portion 22 extending toward the placing slot 111 of the battery tray 100. The supporting portion 22 is located below the tray bottom plate 10, and the supporting portion 22 is configured to support the battery core 201 in the tray bottom plate 10. The edge beam 23 mainly bears the weight of the battery core 201. The tray bottom plate 10 of the battery tray 100 bears a small fraction of the weight of the battery core 201, greatly reducing the weight bearing requirement for the tray bottom plate 10.

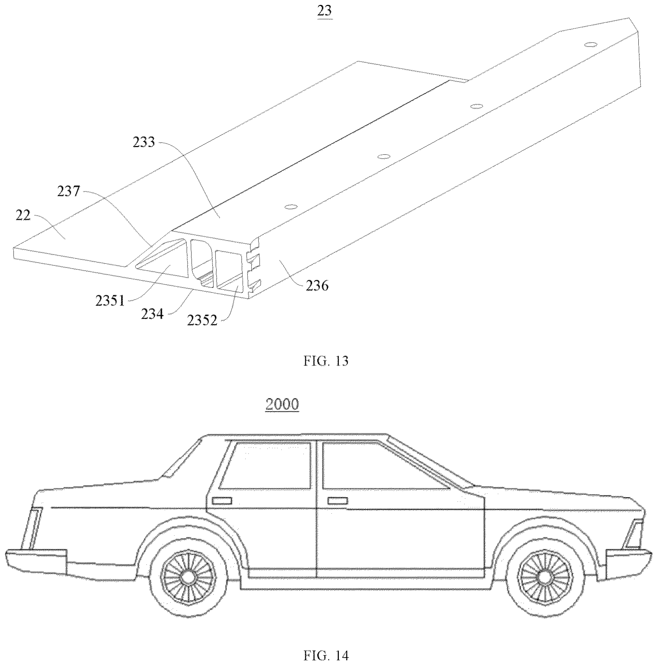

In some embodiments of the present disclosure, as shown in FIGs. 12 and 13, the edge beam 23 is configured as an integrally formed component. Further, the edge beam 23 can be formed of an aluminum material, or the edge beam 23 can be formed of a steel material, which is not limited in the present disclosure. The edge beam 23 can also be made of other metal materials that have the same function as steel. For example, the edge beam 23 is made of a steel material. The edge beam 23 can be rolled with the steel material, or the edge beam 23 can also be extruded with the steel material. By configuring the edge beam 23 as an integrally formed component, the weight bearing capacity of the edge beam 23 is improved and the risk of deformation of the edge beam 23 is reduced. The edge beam 23 made of a steel material can withstand a high temperature of 1500°C more, which ensures the integrity of the edge beam 23 upon thermal runaway of the battery core 201.

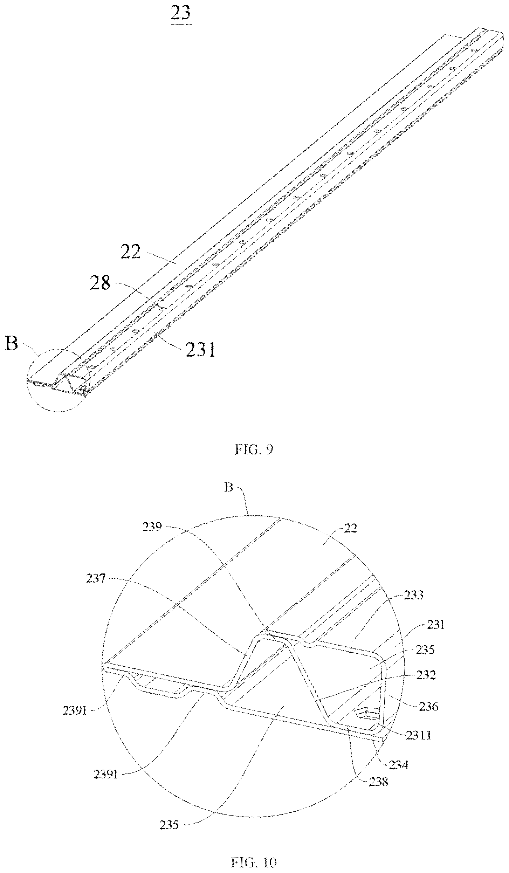

According to an embodiment of the present disclosure, as shown in FIGs. 10 and 11, in the width direction of the edge beam 23, the cavity 2311 has a first side wall 236 arranged away from the placing slot 111. The first side wall 236 is connected between the top wall 233 of the cavity 2311 and the bottom wall 234 of the cavity 2311, and the first side wall 236 is connected to the partition portion 232. In some optional embodiments, as shown in FIG. 11, a lower end of the first side wall 236 is connected with a first connecting portion 238 extending toward the interior of the cavity 2311. The first connecting portion 238 is located at a side of the bottom wall 234 of the cavity 2311 facing the top wall 233 of the cavity 2311, the first side wall 236 is connected to the bottom wall 234 of the cavity 2311 and the partition portion 232 through the first connecting portion 238, and the first connecting portion 238 is fixedly connected to the bottom wall 234 of the cavity 2311. For example, the first connecting portion 238 is welded to the bottom wall 234 of the cavity 2311. Through such an arrangement, the structural strength of the edge beam 23 is further increased, and the stability of the edge beam 23 is further improved.

In some optional embodiments, as shown in FIGs. 10 and 11, in the width direction of the edge beam 23, the cavity 2311 has a second side wall 237 close to the placing slot 111. The second side wall 237 is connected between the top wall 233 of the cavity 2311 and the bottom wall 234 of the cavity 2311, and the second side wall 237 is connected to the partition portion 232. In some optional embodiments, as shown in FIG. 11, an upper end of the second side wall 237 is connected with a second connecting portion 239 extending toward the interior of the cavity 2311. The second connecting portion 239 is located at a side of the top wall 233 of the cavity 2311 facing the bottom wall 234 of the cavity 2311, the second side wall 237 is connected to the top wall 233 of the cavity 2311 and the partition portion 232 through the second connecting portion 239, and the second connecting portion 239 is fixedly connected to the top wall 233 of the cavity 2311. For example, the second connecting portion 239 is welded to the top wall 233 of the cavity 2311. The top wall 233 of the cavity 2311, the bottom wall 234 of the cavity 2311, the first side wall 236 and the second side wall 237 define the cavity 2311 together. Through such an arrangement, the structural strength of the edge beam 23 is further increased, and the stability of the edge beam 23 is further improved.

In some optional embodiments, as shown in FIGs. 10 and 11, the edge beam 23 includes a supporting portion 22. The supporting portion 22 is provided at a side of the edge beam body 231 close to the placing slot 111, and the supporting portion 22 is configured to support the battery core 201. That is, the edge beam body 231 is connected with the supporting portion 22 extending toward the placing slot 111. The supporting portion 22 is configured to support the battery core 201 in the tray bottom plate 10 of the battery tray 100. The supporting portion 22 supports a lower surface of the tray bottom plate 10 to support the battery core 201. The edge beam 23 bears most of the weight of the battery core 201. The tray bottom plate 10 of the battery tray 100 does not bear the weight of the battery core 201 or only bears a small fraction of the weight of the battery core 201, greatly reducing the weight bearing requirement for the tray bottom plate 10.

In some optional embodiments, a lower end of the second side wall 237 is connected with the supporting portion 22 extending toward placing slot 111, the supporting portion 22 can be configured to support the tray bottom plate 10, and the second side wall 237 is connected to the bottom wall 234 of the cavity 2311 through the supporting portion 22. In some optional embodiments, as shown in FIG. 12, in the width direction of the edge beam 23, the bottom wall 234 of the cavity 2311 has a structure strengthening portion 2341 extending below the supporting portion 22. The structure strengthening portion 2341 is connected to an end portion of the supporting portion 22 close to the tray bottom plate 10, or it can be considered that the structure strengthening portion 2341 extends below the supporting portion 22, and an end portion of the bottom wall 234 of the cavity 2311 close to the placing slot 111 is connected to an end portion of the structure strengthening portion 2341 close to the placing slot 111. Further, the structure strengthening portion 2341 is provided with a boss (that is, boss structure 2391) protruding toward the supporting portion 22, and the boss structure 2391 is connected to the supporting portion 22. Through such an arrangement, the structural strength of the edge beam 23 is further increased, and the stability of the edge beam 23 is further improved.

In some optional embodiments, the structure strengthening portion 2341 is provided with multiple boss structures 2391. The multiple boss structures 2391 are arranged in the width direction of the edge beam 23 in sequence. At least one boss structure 2391 of the multiple boss structures 2391 is located below the battery core 201. Such an arrangement enables the boss structure 2391 to support the battery core 201, thereby further improving the weight bearing capacity of the frame 20 and reducing the risk of deformation of the supporting portion 22.

According to another embodiment of the present disclosure, as shown in FIG. 13, in the width direction of the edge beam 23, the cavity 2311 has a first side wall 236 arranged away from the placing slot 111. The first side wall 236 is connected between the top wall 233 of the cavity 2311 and the bottom wall 234 of the cavity 2311. The cavity 2311 has a second side wall 237 close to the placing slot 111. The second side wall 237 is connected between the top wall 233 of the cavity 2311 and the bottom wall 234 of the cavity 2311. The top wall 233 of the cavity 2311, the bottom wall 234 of the cavity 2311, the first side wall 236 and the second side wall 237 define the cavity 2311 together. The bottom wall 234 of the cavity 2311 extends toward the placing slot 111 to form the supporting portion 22 configured to support the tray bottom plate 10. The supporting portion 22 is located below the tray bottom plate 10, and the supporting portion 22 extends to a position below the battery core 201. Such an arrangement enables the supporting portion 22 to support the battery core 201, thereby further improving the weight bearing capacity of the edge beam 23.

In some embodiments of the present disclosure, the second side wall 237 is obliquely connected between the top wall 233 of the cavity 2311 and the bottom wall 234 of the cavity 2311. In the direction from the upper end to the lower end of the edge beam 23, the second side wall 237 is arranged to tilt toward the placing slot 111. Through such an arrangement, the structural strength of the edge beam 23 is further increased, and the stability of the edge beam 23 is further improved, thereby further improving the capability of the edge beam 23 to support the battery core 201, and further reducing the risk of deformation of the frame 20.

As shown in FIGs. 1 to 13, the battery tray 100 according to an embodiment of the present disclosure includes: a tray bottom plate 10 (the tray bottom plate 10 according to the above embodiment) and a frame 20 (the frame 20 according to the above embodiment). The tray bottom plate 10 includes a bottom plate body 11 and an extension portion 12. The bottom plate body 11 defines a placing slot 111 for accommodating a battery core 201 or a battery module. In the present disclosure, description is made by way of example in which the placing slot 111 accommodates the battery core 201. The battery core 201 can be bonded in the placing slot 111 by a structural adhesive. In some optional embodiments, the placing slot 111 has a bottom wall 113 of the placing slot. The bottom wall 113 of the placing slot has a pressurized area 112 for supporting the battery core 201. The pressurized area 112 refers to an area where the orthographic projection of the bottom wall 113 of the placing slot overlaps with the orthographic projection of the battery core 201 in a height direction of the battery tray 100, when the battery core 201 is mounted in the placing slot 111. Alternatively, it can be considered as a contact area between the battery core 201 and the bottom wall 113 of the placing slot when the battery core 201 is mounted in the placing slot 111. The contact area includes an area where the battery core 201 is in direct contact or indirect contact with the bottom wall 113 of the placing slot. For example, the battery core 201 is in indirect contact with the bottom wall 113 of the placing slot when there is an adhesive or a cooling structure between the battery core 201 and the bottom wall 113 of the placing slot, and the battery core 201 is in direct contact with the bottom wall 113 of the placing slot when there is no an additional object between the battery core 201 and the bottom wall 113 of the placing slot. Alternatively, it can be considered that an area where the weight of the battery core 201 directly acts on the bottom wall 113 of the placing slot is the pressurized area 112. In the height direction of the battery tray 100, the orthogonal projection of the bottom wall 113 of the placing slot is also the projection of the bottom wall 113 of placing slot to a plane perpendicular to the height direction of the battery tray 100. In the height direction of the battery tray 100, the orthogonal projection of the battery core 201 is the projection of the battery core 201 in a plane perpendicular to the height direction of the battery tray 100.

When the battery core 201 is mounted in the battery tray 100, the battery core 201 is located in the pressurized area 112 of the placing slot 111. The extension portion 12 is arranged to extend along a peripheral edge of the bottom plate body 11. Further, the extension portion 12 is configured as a loop structure. Particularly, the extension portion 12 is configured as a closed-loop structure.

The frame 20 defines the mounting space 21, and the bottom plate body 11 is mounted to the frame 20. Further, the bottom plate body 11 is fixedly mounted to the frame 20. The bottom plate body 11 may be bonded to the frame 20, or the bottom plate body 11 may be connected to the frame 20 by a bolt. The specific assembly method of the bottom plate body 11 and the frame 20 is not specifically limited, and can be selected according to actual needs. The bottom plate body 11 is mounted in the mounting space 21, and the extension portion 12 is located outside the mounting space 21. In the height direction of the battery tray 100, the extension portion 12 is located above the frame 20 and arranged on the frame 20.

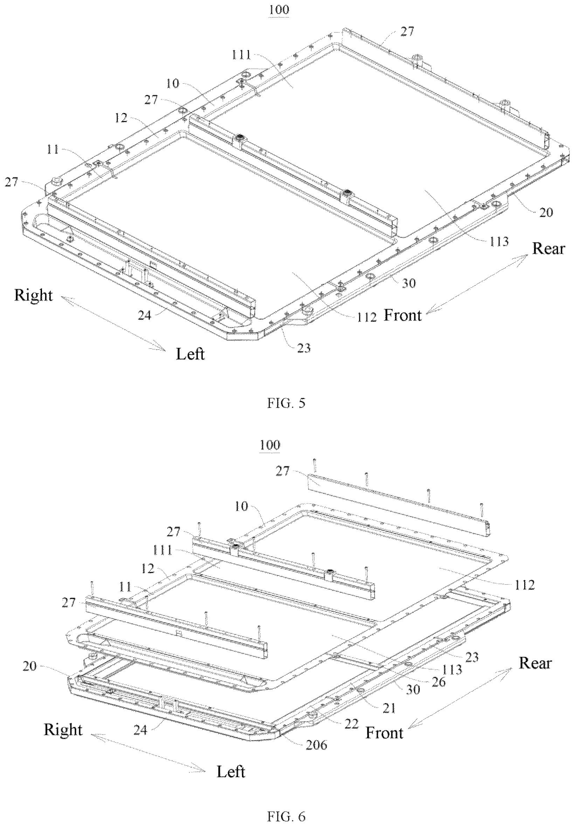

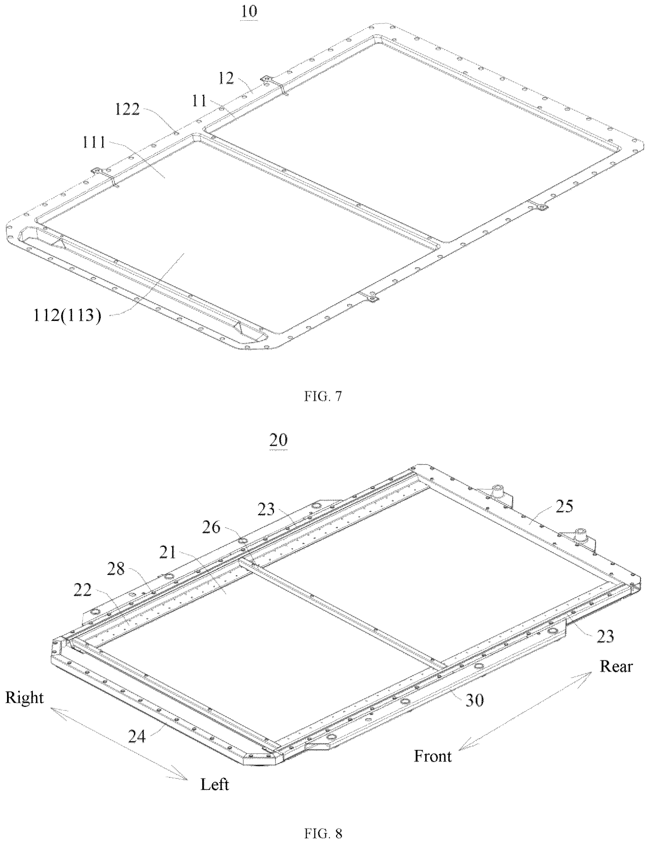

In some embodiments of the present disclosure, as shown in FIGs. 6 and 8, the frame 20 includes a side beam, a front beam 24 and a rear beam 25. At least one of the side beam, the front beam 24 and the rear beam 25 is the edge beam 23 according to the above embodiment. The edge beam 23, the front beam 24 and the rear beam 25 are connected to define the mounting space 21. The connection of the side beam, the front beam 24 and the rear beam 25 includes direct connection and indirect connection. For example, the connection of the side beam and the front beam 24 is described. The side beam and the front beam 24 can be directly connected, or the side beam and the front beam 24 can also be indirectly connected by an additional beam.

In some optional embodiments, the side beam and/or the front beam 24 and/or the rear beam 25 has the supporting portion 22 extending toward the mounting space 21, or it can be considered that at least one of the side beam, the front beam 24 and the rear beam 25 has the supporting portion 22 extending toward the mounting space 21. The supporting portion 22 is configured to support the tray bottom plate 10. Two side beams, one rear beam 25 and one front beam 24 are provided. When the frame 20 is arranged in a pattern as shown in FIG. 8, the two side beams are spaced away in the left-right direction in FIG. 8, and the front beam 24 and the rear beam 25 are connected between the two side beams. The front beam 24 and the rear beam 25 are spaced away in the front-rear direction of the frame 20. In this way, the front beam 24, the rear beam 25 and the two side beams jointly define the mounting space 21. When the battery core 201 is arranged to extend in the left-right direction as shown in FIG. 8, by arranging the supporting portion 22 on the side beam, each battery core 201 is ensured to be supported by the supporting portion 22, which can further ensure that the supporting portion 22 supports the battery core 201, and further ensure that the frame 20 is mainly used for bearing the weight of the battery core 201. Consequently, the arrangement of the position of the supporting portion 22 is reasonable. It can be understood that when the battery tray 100 is mounted on a vehicle 2000, the width direction of the battery tray 100 may be consistent with the width direction of the vehicle, and the length direction of the battery tray 100 may be consistent with the length direction of the vehicle. Definitely, the width direction of the battery tray 100 may be consistent with the length direction of the vehicle, and the length direction of the battery tray 100 may be consistent with the width direction of the vehicle.

Further, the supporting portion 22 is configured to support the pressurized area 112 of the tray bottom plate 10. As shown in FIGs. 6, 8 and 11, description is made by way of example in which the battery tray 100 is arranged in an up-down direction in the present disclosure. After the bottom plate body 11 is mounted in the mounting space 21, the extension portion 12 is arranged outside the mounting space 21. In the up-down direction of the battery tray 100, the extension portion 12 is arranged corresponding to the frame 20. Particularly, as shown in FIG. 11, the extension portion 12 is located above the frame 20, and the extension portion 12 is arranged to direct face the frame 20. In the up-down direction of the battery tray 100, the extension portion 12 covers the entire upper surface of the frame 20.

As shown in FIG. 11, when the battery core 201 is mounted in the placing slot 111, the battery core 201 is located in the pressurized area 112, and the supporting portion 22 supports the pressurized area 112. The weight of the battery core 201 is loaded on the frame 20, the frame 20 bears most of the weight of the battery core 201, and the tray bottom plate 10 does not bear the weight of the battery core 201 or bears a small fraction of the weight of the battery core 201, greatly reducing the weight bearing requirement for the tray bottom plate 10. Therefore, the tray bottom plate 10 can be made of materials with lower strength and small thickness. In some optional embodiments, the tray bottom plate 10 is configured as a nonmetallic member. In some optional embodiments, the tray bottom plate 10 is configured as an insulating member. The tray bottom plate 10 may be formed of a lightweight nonmetallic composite material. For example, the lightweight nonmetallic composite material can be made of a resin and glass fiber, where the resin can be epoxy resin or polyurethane, which is not limited in the present disclosure. The lightweight composite material can also be a composite material that is made of other resins and glass fiber and has the same function. Such an arrangement can reduce the weight of the tray bottom plate 10, which is beneficial to the lightweight design of the battery tray 100 and the battery pack 200. The existing tray bottom plate 10 is made of an aluminum material. In the present disclosure, the tray bottom plate 10 is formed of a nonmetallic composite material, which reduces the production cost of the tray bottom plate 10, and facilitates the reduction of the production cost of the battery tray 100 and the battery pack 200. It is to be understood that the tray bottom plate 10 formed of a nonmetallic composite material has excellent electrical insulation performance. When a serious bottom scratching accident occurs to the vehicle 2000, the battery pack 200 will not have the risks such as high-voltage arcing.

In some optional embodiments, the tray bottom plate 10 is configured as an integrally formed component. The tray bottom plate 10 is molded with a lightweight nonmetallic composite material. During the molding process, the tray bottom plate 10 has good air tightness formed after the resin is melted to flow and then solidified, and the tray bottom plate 10 is ensured to have good flatness and dimensional accuracy by molding, thus ensuring the sealing function of the tray bottom plate 10. The frame 20 can be formed by tailor-welding with a metal. After tailor-welding, the strength of the welded structure and necessary flatness of the product need to be ensured. The tailor-welding efficiency is high, which improves the production efficiency of the battery tray 100. Moreover, the tray bottom plate 10 is responsible for sealing; and there is no need for weld grinding and air tightness testing, and no risk of sealing failure caused by welding. The tray bottom plate 10 can be formed by molding with a composite material. The tray bottom plate 10 has high production efficiency, and the precision of the mold is high, so a high flatness can be attained. Accordingly, the size requirement for the battery core 201 is reduced.

In addition, the existing battery tray 100 does not divide the product structure with respect to the functions of weight bearing and sealing. In the production of the battery tray 100, both the overall weight bearing capacity and the sealing performance need to meet the requirements, resulting in low manufacturing efficiency and yield of the battery tray 100. In the present disclosure, the functions of weight bearing and sealing are divided. The frame 20 is mainly responsible for weight bearing, and the tray bottom plate 10 is mainly responsible for sealing. These improve the manufacturing efficiency and yield of the battery tray 100.

Therefore, with the cooperation of the tray bottom plate 10 and the frame 20 where the frame 20 mainly bears the weight of the battery core 201 and the tray bottom plate 10 bears only a small fraction of the weight of the battery core 201; and the tray bottom plate 10 is mainly responsible for sealing, the thickness of the tray bottom plate 10 is reduced, and the tray bottom plate 10 can be formed of a lightweight composite material, which is beneficial to the lightweight design and reduction of the production cost of the battery tray 100 and the battery pack 200. After the tray bottom plate 10 and the frame 20 are assembled, there is no risk of sealing failure of the battery tray 100 caused by welding, and there is no need for weld grinding and air tightness testing of the battery tray 100, thus improving the production efficiency of the battery tray 100.

In some embodiments of the present disclosure, the tray bottom plate 10 and the frame 20 are in sealed connection. The frame 20 is provided with multiple bolt holes 28, the extension portion 12 is provided with multiple avoidance through holes 122, and the multiple bolt holes 28 are arranged in one-to-one correspondence with the multiple avoidance through holes 122. Multiple rivet nuts are embedded in the frame 20, and the multiple rivet nuts are arranged in one-to-one correspondence with the multiple bolt holes 28. The rivet nut extends through the escape through hole 122 and the bolt hole 28. The battery pack 200 includes a cover 40, the cover 40 and the tray bottom plate 10 jointly define an accommodating cavity 41 for accommodating the battery core 201, and the cover 40 is connected to the frame 20. Further, the cover 40 is covered at an open end of the placing slot 111 to define the accommodating cavity 41. The extension portion 12 is sandwiched between the cover 40 and the frame 20. The bolt extends through the cover 40, the avoidance through hole 122 of the extension portion 12 and the bolt hole 28 of the frame 20, and is connected to the rivet nut, whereby the cover 40, the tray bottom plate 10 and the frame 20 are assembled together. Through the sealed connection between the tray bottom plate 10 and the frame 20, sealing is formed between the bolt and the bolt hole 28, so that the leak-tightness of the battery tray 100 is improved, the water vapor can be prevented from flowing into the placing slot 111 through the bolt hole 28 on the frame 20, and the battery pack 200 can also be prevented from being short-circuited, thereby improving the safety of the battery pack 200 during use.

In some embodiments of the present disclosure, as shown in FIG. 11, the tray bottom plate 10 and the frame 20 are sealed connected by a sealing structure 13. Further, the sealing structure 13 is configured as a sealant, and the sealing structure 13 may also be configured as a rubber member, which is not limited in the present disclosure. The sealing structure 13 can also be configured as a seal having the same function as the sealant. The sealing structure 13 can be sandwiched in the whole space between the tray bottom plate 10 and the frame 20, or the sealing structure 13 can be sandwiched in part of the space between the tray bottom plate 10 and the frame 20. The sealing structure 13 can be arranged to surround the bolt hole 28 and the avoidance through hole 122. Further, the sealing structure 13 can extend into the bolt hole 28 and the avoidance through hole 122. Through such an arrangement, sealed connection can be enabled between the tray bottom plate 10 and the frame 20, to effectively prevent water vapor from flowing into the accommodating cavity 41 via the bolt hole 28 on the frame 20.

In some embodiments of the present disclosure, as shown in FIG. 11, the sealing structure 13 is provided between the extension portion 12 and the frame 20. Since the avoidance through hole 122 is provided in the extension portion 12, by providing the sealing structure 13 between the extension portion 12 and the frame 20, the sealing structure 13 can seal the bolt hole 28 and the avoidance through hole 122, making the arrangement of the position of the sealing structure 13 reasonable.

In some embodiments of the present disclosure, as shown in FIG. 11, when the battery tray 100 is arranged in a pattern as shown in FIG. 11, in the height direction of the battery tray 100, the orthographic projection of the supporting portion 22 and the orthographic projection of the pressurized area 112 have an overlapping area. When the battery core 201 is accommodated in the placing slot 111, such an arrangement can ensure that the supporting portion 22 supports the battery core 201, and ensure that the frame 20 is mainly used for bearing the weight of the battery core 201.

In some embodiments of the present disclosure, the bottom wall 113 of the placing slot 111 is formed with a pressurized area 112. Alternatively, it can be considered that the pressurized area 112 is provided on the bottom wall 113 of the placing slot 111. As shown in FIG. 11, when the battery tray 100 is arranged in a pattern as shown in FIG. 11, the supporting portion 22 is located below the bottom plate body 11, and the supporting portion 22 supports the bottom wall 113. This arrangement ensures that the supporting portion 22 is located below and support the pressurized area 112, which can further ensure that the supporting portion 22 supports the battery core 201, and further ensure that the frame 20 is mainly used for bearing the weight of the battery core 201. Consequently, the arrangement of the position of the pressurized area 112 is reasonable.

In some embodiments of the present disclosure, as shown in FIG. 8, the frame 20 further includes a supporting beam 26. The supporting beam 26 is connected between two edge beams 23, the supporting beam 26 is connected between the front beam 24 and the rear beam 25, the supporting beam 26 is connected between the front beam 24 and the edge beam 23, or the supporting beam 26 is connected between the rear beam 25 and the edge beam 23. This arrangement can improve the structural strength of the frame 20 and thus the structural strength of the battery tray 100.

In some embodiments of the present disclosure, as shown in FIGs. 5 and 6, the battery tray 100 further includes an expansion beam 27. The expansion beam 27 is provided on a side of the tray bottom plate 10 away from the frame 20. When the battery tray 100 is arranged in a pattern as shown in FIGs. 5 and 6, the expansion beam 27 is provided above the tray bottom plate 10, and the expansion beam 27 is mounted on the support beam 26 by a bolt. After the battery core 201 is mounted in the placing slot 111, when the battery core 201 expands, the expansion beam 27 restrains the battery core 201, to improve the safety of the battery core 201 during use.

Further, multiple supporting beams 26 are provided. The multiple supporting beams 26 are spaced away in sequence in a length direction of the edge beam 23. The length direction of the edge beam 23 refers to the front-rear direction in FIG. 6. Multiple expansion beams 27 are provided, and the multiple expansion beams 27 are spaced away in sequence in the length direction of the edge beam 23. The multiple expansion beams 27 and the multiple supporting beams 26 are arranged in one-to-one correspondence, and one expansion beam 27 is mounted on one supporting beam 26 by a bolt, to stably mount the expansion beam 27 on the frame 20.

In some embodiments of the present disclosure, as shown in FIG. 11, the supporting portion 22 is provided close to the lower end of the edge beam 23. Alternatively, it can be considered that the supporting portion 22 is provided close to an end portion of the edge beam 23 away from the tray bottom plate 10. After the bottom plate body 11 is mounted in the mounting space 21, by providing the supporting portion 22 close to the end portion of the edge beam 23 away from the tray bottom plate 10, the supporting portion 22 is ensured to be located below and support the bottom plate body 11, and the bottom plate body 11 is ensured to be mounted in the mounting space 21.

In some embodiments of the present disclosure, as shown in FIGs. 5 to 7, and 11, when the battery tray 100 is arranged in a pattern as shown in FIG. 11, the upper end of the placing slot 111 is arranged to be open, and the battery core 201 can be placed in the placing slot 111 through the open end of the placing slot 111. The extension portion 12 is arranged to extend along a peripheral edge at the open end of the placing slot 111. As shown in FIG. 11, the extension portion 12 is connected to an upper end of the bottom plate body 11. After the bottom plate body 11 is mounted in the mounting space 21, such an arrangement enables the extension portion 12 to be provided outside the placing slot 111, and ensures that the extension portion 12 is arranged corresponding to the frame 20 in the up-down direction of the battery tray 100, thereby ensuring the sealing of the battery tray 100.

In some embodiments of the present disclosure, as shown in Figs. 8, 10 and 11, a surface of the supporting portion 22 close to the tray bottom plate 10 is configured as a planar surface. That is to say, as shown in FIG. 11, the upper surface of the supporting portion 22 is a planar surface, and such an arrangement can ensure the supporting area between the supporting portion 22 and the bottom plate body 11 and allows the supporting portion 22 to well support the battery core 201.

In some embodiments of the present disclosure, the supporting portion 22 is located below the bottom plate body 11 and fixedly connected to the bottom plate body 11. In some optional embodiments, the tray bottom plate 10 is bonded to the frame 20. Further, the supporting portion 22 and the bottom plate body 11 are bonded by applying an adhesive (such as structural adhesive) between the tray bottom plate 10 and the frame 20. The dimensional tolerance of the frame 20 is absorbed by controlling the thickness of the adhesive. Moreover, the tray bottom plate 10 has good flatness, and the manufacturing requirements for the tray bottom plate 10 and the frame 20 are reduced by taking advantage of the characteristic that the adhesive can absorb the tolerance. Moreover, when the existing tray bottom plate 10 and the frame 20 are welded, the tray bottom plate 10 tend to deform during the welding process, which increases the size requirements for the battery core 201 in the subsequent assembly process of the battery pack 200, and affects the assembly efficiency of the battery pack 200. In the present disclosure, the tray bottom plate 10 and the frame 20 are bonded to avoid the welded connection of the tray bottom plate 10 and the frame 20. This can prevent the deformation of the tray bottom plate 10, reduce the size requirements for the battery core 201 in the subsequent assembly process of the battery pack 200, and improve the assembly efficiency of the battery pack 200.

In some embodiments of the present disclosure, the tray bottom plate 10 is configured as an integrally formed component. The tray bottom plate 10 is molded with a lightweight composite material. During the molding process, the tray bottom plate 10 has good air tightness formed after the resin is melted to flow and then solidified, and the tray bottom plate 10 is ensured to have good flatness and dimensional accuracy by molding, thus ensuring the sealing function of the tray bottom plate 10.

In some embodiments of the present disclosure, the frame 20 is configured as a metal piece, the frame 20 can be formed of an aluminum material, or the frame 20 can also be formed of a steel material, which is not limited in the present disclosure. The frame 20 can also be made of other metal materials that have the same function as steel. For example, the frame 20 is made of a steel material, where the frame 20 is rolled with the steel material, or the frame 20 can also be extruded with the steel material. By configuring the frame 20 as a metal member, the weight bearing capacity of the frame 20 can be improved and the risk of deformation of the frame 20 can be reduced.

In some embodiments of the present disclosure, as shown in FIGs. 5 and 6, the frame 20 is connected with a lifting lug structure 30. The lifting lug structure 30 is provided with a mounting hole, and the lifting lug structure 30 is mounted on the vehicle 2000 by a fastener (such as a bolt), so as to achieve the purpose of mounting the battery pack 200 on the vehicle 2000.

As shown in FIGs. 1 to 11, the battery pack 200 according to the embodiment of the present disclosure includes a battery core 201, a battery tray 100 and a cover 40. The battery tray 100 is a battery tray 100 according to the above embodiment. The battery tray 100 has a placing slot 111, and the battery core 201 is accommodated in the placing slot 111. The cover 40 and the tray bottom plate 10 jointly define an accommodating cavity 41 for accommodating the battery core 201, and the cover 40 is connected to the frame 20. Further, the cover 40 is covered at an open end of the placing slot 111 to define the accommodating cavity 41. The extension portion 12 is sandwiched between the cover 40 and the frame 20. The bolt extends through the cover 40. The cover 40, the tray bottom plate 10 and the frame 20 are assembled together by the extension portion 12 and the frame 20. Further, a seal 203 (such as a sealing ring) is sandwiched between the extension portion 12 and the cover 40, and the seal 203 can seal the accommodating cavity 41. The cover 40 and the tray bottom plate 10 define a sealed insulating cavity (i.e. the accommodating cavity 41). After the battery core 201 is placed in the accommodating cavity 41, the battery core 201 can be completely isolated from the frame 20, such that the battery core 201 is in a completely insulated environment, and the battery pack 200 has no risk of electric leakage.

In some embodiments of the present disclosure, as shown in FIG. 1, the battery pack 200 further includes: a press plate 202. The press plate 202 is configured as a closed ring structure. The cover 40, the seal 203 and the extension portion 12 are sandwiched between the press plate 202 and the frame 20. A bolt extends through the press plate 202, the cover 40, the extension portion 12 and the frame 20 to assemble the press plate 202, the cover 40, the tray bottom plate 10 and the frame 20 together. The press plate 202 allows the whole seal 203 to be uniformly pressed, and ensures the reliable sealing of the accommodating cavity 41.

As shown in FIG. 14, the vehicle 2000 according to the embodiment of present disclosure includes a battery pack 200 according to above embodiment. The battery pack 200 is mounted on the vehicle 2000 to provide electric energy for the vehicle 2000. The frame 20 of the battery pack 200 bears most of the weight of the battery core 201, and the tray bottom plate 10 bears only a small fraction of the weight of the battery core 201. The tray bottom plate 10 is mainly responsible for sealing. The tray bottom plate 10 can be formed of a lightweight composite material, which is beneficial to the lightweight design and reduction of the production cost of the battery tray 100, the battery pack 200 and the vehicle 2000. After the tray bottom plate 10 and the frame 20 are assembled, there is no risk of sealing failure of the battery tray 100 caused by welding, and there is no need for weld grinding and air tightness testing of the battery tray 100, which improves the production efficiency of the battery tray 100 and the vehicle 2000. Moreover, the tray bottom plate 10 formed of a composite material has excellent electrical insulation performance. When a serious bottom scratching accident occurs to the vehicle 2000, the battery pack 200 will not have the risks such as high-voltage arcing, so the safety of the vehicle 2000 is improved.

In the description of the specification, the description with reference to the terms "an embodiment", "some embodiments", "exemplary embodiments", "example", "specific example", or "some examples" and so on means that specific features, structures, materials or characteristics described in connection with the embodiment or example are embraced in at least one embodiment or example of the present disclosure. In the specification, exemplary descriptions of the foregoing terms do not necessarily refer to the same embodiment or example. In addition, the described specific features, structures, materials, or characteristics may be combined in a proper manner in any one or more of the embodiments or examples.

Although embodiments of the present disclosure has been illustrated and described above, a person of ordinary skill in the art should understand that various changes, modifications, replacements and variations can be made to the embodiments without departing from the principles and spirit of the present disclosure, and the scope of the present disclosure is as defined by the appended claims and their equivalents.

## Claims

1. An edge beam (23) for a battery tray (100), the battery tray (100) having a placing slot (111) for accommodating a battery core (201), the edge beam (23) comprising:
an edge beam body (231), the edge beam body (231) defining a cavity (2311), the edge beam body (231) having a partition portion (232), the partition portion (232) being located in the cavity (2311), the partition portion (232) being connected between a top wall (233) and a bottom wall (234) of the cavity (2311) to divide the cavity (2311) into a first sub-cavity (2351) and a second sub-cavity (2352), the first sub-cavity (2351) and the second sub-cavity (2352) being arranged in a first direction of the edge beam (23) in sequence, the first sub-cavity (2351) having a cross-sectional area of S1, the second sub-cavity (2352) having a cross-sectional area of S2, and S1 and S2 meeting the relation formula: 0.8<S1/S2<1.

2. The edge beam (23) for a battery tray (100) according to claim 1, wherein in the first direction of the edge beam (23), the first sub-cavity (2351) is located between the second sub-cavity (2352) and the placing slot (111).

3. The edge beam (23) for a battery tray (100) according to claim 1 or 2, wherein the partition portion (232) is obliquely connected between the top wall (233) and the bottom wall (234) of the cavity (2311).

4. The edge beam (23) for a battery tray (100) according to any one of claims 1 to 3, wherein in a direction from an upper end to a lower end of the edge beam (23), the partition portion (232) is arranged to tilt away from the placing slot (111).

5. The edge beam (23) for a battery tray (100) according to any one of claims 1 to 4, wherein the cross-sectional shape of the first sub-cavity (2351) and the cross-sectional shape of the second sub-cavity (2352) are both triangular or trapezoidal.

6. The edge beam (23) for a battery tray (100) according to any one of claims 1 to 5, wherein the edge beam (23) is configured as an integrally formed component.

7. The edge beam (23) for a battery tray (100) according to any one of claims 1 to 6, wherein in a width direction of the edge beam (23), the cavity (2311) has a first side wall (236) arranged away from the placing slot (111), the first side wall (236) is connected between the top wall (233) and the bottom wall (234) of the cavity (2311), and the first side wall (236) is connected to the partition portion (232).

8. The edge beam (23) for a battery tray (100) according to claim 7, wherein a lower end of the first side wall (236) is connected with a first connecting portion (238) extending toward the interior of the cavity (2311), the first connecting portion (238) is located at a side of the bottom wall (234) of the cavity (2311) facing the top wall (233) of the cavity (2311), the first side wall (236) is connected to the bottom wall (234) of the cavity (2311) and the partition portion (232) through the first connecting portion (238), and the first connecting portion (238) is fixedly connected to the bottom wall (234) of the cavity (2311).

9. The edge beam (23) for a battery tray (100) according to any one of claims 1 to 8, wherein the cavity (2311) has a second side wall (237) close to the placing slot (111), the second side wall (237) is connected between the top wall (233) and the bottom wall (234) of the cavity (2311), and the second side wall (237) is connected to the partition portion (232).

10. The edge beam (23) for a battery tray (100) according to claim 9, wherein an upper end of the second side wall (237) is connected with a second connecting portion (239) extending toward the interior of the cavity (2311), the second connecting portion (239) is located at a side of the top wall (233) of the cavity (2311) facing the bottom wall (234) of the cavity (2311), the second side wall (237) is connected to the top wall (233) of the cavity (2311) and the partition portion (232) through the second connecting portion (239), and the second connecting portion (239) is fixedly connected to the top wall (233) of the cavity (2311).

11. The edge beam (23) for a battery tray (100) according to claim 9 or 10, the edge beam (23) further comprising a supporting portion (22), the supporting portion (22) being provided at a side of the edge beam body (231) close to the placing slot (111), and the supporting portion (22) being configured to support the battery core (201).

12. The edge beam (23) for a battery tray (100) according to claim 11, wherein a lower end of the second side wall (237) is connected with the supporting portion (22) extending toward the placing slot (111), and the second side wall (237) is connected to the bottom wall (234) of the cavity (2311) through the supporting portion (22).

13. The edge beam (23) for a battery tray (100) according to any one of claims 9 to 12, wherein the second side wall (237) is obliquely connected between the top wall (233) and the bottom wall (234) of the cavity (2311), and in the direction from the upper end to the lower end of the edge beam (23), the second side wall (237) is arranged to tilt toward the placing slot (111).

14. The edge beam (23) for a battery tray (100) according to claim 11 or 12, wherein in the width direction of the edge beam (23), the bottom wall (234) of the cavity (2311) has a structure strengthening portion (2341) extending below the supporting portion (22), and the structure strengthening portion (2341) is connected to an end portion of the supporting portion (22) close to the placing slot (111).

15. The edge beam (23) for a battery tray (100) according to claim 14, wherein the structure strengthening portion (2341) has a boss protruding toward the supporting portion (22), and the boss is connected to the supporting portion (22).

16. The edge beam (23) for a battery tray (100) according to any one of claims 1 to 6, wherein in the width direction of the edge beam (23), the cavity (2311) has a first side wall (236) arranged away from the placing slot (111), the first side wall (236) is connected between the top wall (233) and the bottom wall (234) of the cavity (2311), and
the cavity (2311) has a second side wall (237) close to the placing slot (111), the second side wall (237) is connected between the top wall (233) and the bottom wall (234) of the cavity (2311), the top wall (233) of the cavity (2311), the bottom wall (234) of cavity (2311), the first side wall (236), and the second side wall (237) defining the cavity (2311) together, and the bottom wall (234) of the cavity (2311) extending toward the placing slot (111) to form the supporting portion (22) configured to support the battery core (201).

17. A battery tray (100), comprising an edge beam (23) for a battery tray (100) according to any one of claims 1 to 16.

18. The battery tray (100) according to claim 17, comprising:
a tray bottom plate (10), the tray bottom plate (10) comprising a bottom plate body (11) and an extension portion (12), the bottom plate body (11) defining a placing slot (111) for accommodating a battery core (201), the extension portion (12) extending along a peripheral edge of the bottom plate body (11); and
a frame (20), the frame (20) comprising a side beam, a front beam (24), and a rear beam (25), at least one of the side beam, the front beam (24), and the rear beam (25) being the edge beam (23), the side beam, the front beam (24), and the rear beam (25) being connected to form a mounting space (21), the bottom plate body (11) being mounted in the mounting space (21), in a height direction of the battery tray (100), the extension portion (12) being located above the frame (20) and arranged on the frame (20), at least one of the side beam, the front beam (24), and the rear beam (25) having a supporting portion (22) extending toward the mounting space and, the supporting portion (22) being configured to support the tray bottom plate (10).

19. A battery pack (200), comprising a battery core (201) and a battery tray (100) according to claim 17 or 18, the battery tray (100) having a placing slot (111), and the battery core (201) being accommodated in the placing slot (111).

20. A vehicle (2000), comprising a battery pack (200) according to claim 19.
